# EUROPÄISCHE PATENTSCHRIFT

(11) **EP 3 774 436 B1**
(45) Veröffentlichungstag und Bekanntmachung des Hinweises auf die Patenterteilung: **25.05.2022**
(21) Anmeldenummer: 19724084.9
(22) Anmeldetag: 24.04.2019
(51) Int. Cl.: B60L 15/32, B60L 15/20, B60L 7/18, B60L 7/16, B60L 7/24, B60L 9/00

(54) **VERFAHREN ZUM BREMSEN EINES ZUGVERBANDS**
METHOD FOR BRAKING A TRAIN SET
PROCÉDÉ POUR LE FREINAGE D'UN TRAIN

(30) Priorität: 04.05.2018 DE 102018206909
(43) Veröffentlichungstag der Anmeldung: 17.02.2021
(73) Patentinhaber: Siemens Mobility GmbH, 81739 München (DE)
(72) Erfinder: ZENK, Ralph, 82194 Gröbenzell (DE); REINICKE, Stefan, 85304 Ilmmünster (DE)
(86) Internationale Anmeldenummer: PCT/EP2019/060520
(87) Internationale Veröffentlichungsnummer: WO 2019/211142

(56) Entgegenhaltungen:
- CN-A- 107 487 308
- JP-A- S6 335 103
- JP-A- 2019 040 500

## Beschreibung

Verfahren zum Bremsen eines Zugverbands Die Erfindung betrifft ein Verfahren zum Bremsen eines Zugverbands. Die Erfindung betrifft ferner ein Computerprogrammprodukt.

Bekannt ist, dass im ZDS/ZMS-Betrieb (Zeitmultiplex-Doppeltraktionssteuerung/Zeitmultiplex-Mehrfachtraktionssteuerung), der auch als TMC-Betrieb (engl. Time Multiplex Communication) bekannt ist, eine Doppel- bzw. Mehrfachtraktion eines Zugverbands realisiert wird, wobei ein von einem Triebfahrzeugführer pro Lok vorgegebener maximaler Oberstrom-Grenzwert per Zugbus nicht von der führenden Lok an die geführte Lok des Zugverbands übertragen werden kann. Dadurch gibt es nachteiliger Weise keine Möglichkeit, den elektrischen Rückspeisestrom einer geführten Lok zu begrenzen, wenn sie eine Betriebsbremsung über die Druckluftbremsleitung unter Einsatz der regenerativen Bremse elektrisch ausführt.

Wenn alle Lokomotiven im Zugverband, also auch die geführten Lokomotiven, ihre Bremskraftsollwerte in Abhängigkeit von der Hauptluftleitung-Druckabsenkung individuell einstellen, kann dies zu einer Überschreitung der maximalen Netzstromobergrenze führen.

Oberstrom-Grenzwerte für geführte Loks können nur abhängig vom elektrischen Spannungssystem und Land über die Netzkennung eingestellt werden, individuelle Vorgaben durch den Triebfahrzeugführer sind von der führenden Lok aus nicht möglich.

Eine Oberstromregelung mit individuellen Vorgaben ist nur möglich, wenn die elektrische Bremse (E-Bremse) unabhängig von der Hauptluftleitung verwendet wird, also nicht bei einer Bremsanforderung über die Hauptluft- bzw. Druckluftbremsleitung.

Denkbar wäre zwar, dass pro Lok der Oberstromgrenzwert auf der geführten Lok über das Display eingegeben werden kann. Dies erfordert jedoch einen hohen Aufwand seitens des Triebfahrzeugführers, der jeweils auf allen geführten Loks den genannten Oberstromgrenzwert für die jeweilige geführte Lok manuell eingeben müsste.

Es ist daher eine Aufgabe der vorliegenden Erfindung, ein verbessertes, insbesondere ein netzoptimiertes Bremsen eines Zugverbands bereit zu stellen.

Diese Aufgabe wird durch ein Verfahren mit den Merkmalen gemäß Anspruch 1 gelöst.

Vorteilhafte Weiterbildungen sind in den Unteransprüchen angegeben.

Zusammengefasst weist das Verfahren zum Bremsen eines Zugverbands, wobei eine führende Lok mit wenigstens einer geführten Lok mittels eines Zeitmultiplex-Zugbussystems verbunden ist, die folgenden Schritte auf:
- Erfassen eines aktuellen elektrischen Betriebsstroms der geführten Lok;
- Erfassen eines aktuellen elektrischen Betriebsstroms der führenden Lok;
- Erfassen eines maximalen Rückstromwerts;
- Erfassen eines pneumatischen Bremsanforderungswerts der Druckluftbremsleitung;
- Ermitteln eines maximalen elektrischen Rückstroms und eines elektrischen Bremssollwerts der geführten Lok aus dem aktuellen elektrischen Betriebsstrom der geführten Lok, dem aktuellen elektrischen Betriebsstrom der führenden Lok, dem maximalen Betriebsstromwert und dem pneumatischen Bremsanforderungswert der Druckluftbremsleitung;
- Übermitteln des elektrischen Bremssollwerts über das Zeitmultiplex-Zugbussystem an die geführte Lok,
- Elektrisches Bremsen des Zugverbands mittels des elektrischen Bremssollwerts derart, dass der maximal rückspeisbare Oberstrom der geführten Lok nicht überschritten wird.

Auf diese Weise wird der von der geführten Lok zurückgespeiste elektrische Strom derart begrenzt, dass keine Überlastung des elektrischen Versorgungsnetzes stattfindet. Erreicht wird dies dadurch, dass die elektrische Bremskraft erforderlichenfalls reduziert und die fehlende Bremskraft stattdessen pneumatisch aufgebracht wird.

Vorteilhaft kann somit auch bei nicht leistungsfähigen Zugbussystemen eine Begrenzung der elektrischen Rückspeisung der geführten Lok erreicht werden.

### GEAENDERTES BLATT

Eine vorteilhafte Weiterbildung des Verfahrens sieht vor, dass ein manuell eingegebener maximaler Rückstromwert erfasst wird. Auf diese Weise kann vorteilhaft der Triebfahrzeugführer den maximal zulässigen Wert des Rückspeisestroms (beispielsweise pro Streckenabschnitt) manuell eingeben, der vom Verfahren eingelesen und verarbeitet wird.

Eine weitere vorteilhafte Weiterbildung des Verfahrens sieht vor, dass ein auf Null eingestellter maximaler Rückstromwert erfasst wird. Vorteilhaft wird dadurch ein sicheres Bremsen des Zugverbands beim Einfahren in einen Stationsbereich unterstützt. In der Regel ist von vielen Bahnverwaltungen vorgeschrieben, dass in Kopfbahnhöfe ausschließlich mittels pneumatischen Bremsens eingefahren werden darf, sodass in diesem Fall das elektrische Bremsen vollständig deaktiviert wird.

Eine weitere vorteilhafte Weiterbildung des Verfahrens sieht vor, dass der aktuelle elektrische Betriebsstrom der geführten Lok und der elektrische Bremssollwert über einen TMC-Bus übertragen werden. Auf diese Weise kann ein in der Übertragungskapazität beschränkter Zugbus verwendet werden, um die geführte Lok von dem maximalen rückspeisbaren Strom in Kenntnis zu setzen und dadurch eine geeignete Bremsaktion durchzuführen, ohne das Versorgungsnetz zu überlasten.

Die Erfindung wird mit Hilfe von Figuren näher erläutert:
- Fig. 1: zeigt eine Darstellung eines Zugverbands mit einer geführten Lok und einer führenden Lok.
- Fig. 2: zeigt ein Zahlenbeispiel ohne Eingriff der vorgeschlagenen Oberstromregelung.
- Fig. 3: zeigt ein Zahlenbeispiel mit einem Eingriff der vorgeschlagenen Oberstromregelung.
- Fig. 4: zeigt ein prinzipielles Blockschaltbild einer Vorrichtung zum Bremsen eines Zugverbands.
- Fig. 5: zeigt ein prinzipielles Diagramm eines Verfahrens zum Bremsen eines Zugverbands.

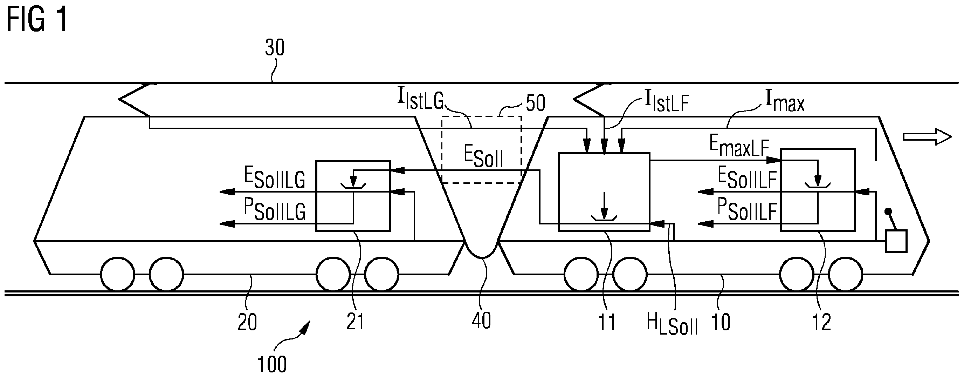

Fig. 1 zeigt stark vereinfacht einen Zugverband 100 mit einer führenden Lok 10 und wenigstens einer geführten Lok 20. Obwohl in Fig. 1 lediglich eine einzelne geführte Lok 20 dargestellt ist, ist das vorgeschlagene Verfahren auch für zwei oder mehrere geführte Loks 20 einsetzbar. In weiterer Folge wird das vorgeschlagene Verfahren für eine einzelne geführte Lok 20 näher erläutert. Die führende Lok 10 ist mit der geführten Lok 20 funktional über ein Zeitmultiplex-Zugbussystem 50 verbunden, welches eine begrenzte Übertragungskapazität durch eine definierte Datenbreite (z.B. zehn Bytes) aufweist, wobei die genannten Bytes nacheinander im Zeitmultiplexbetrieb übertragen werden.

Das an sich bekannte Zeitmultiplex-Zugbussystem 50 kann als ein ZDS/ZMS-Bus realisiert sein, der eine Doppeltraktion (mittels ZDS-Bus) oder eine Mehrfachtraktion (mittels ZMS-Bus) der Loks 10, 20 des Zugverbands 100 realisiert. Beispielsweise kann das Zeitmultiplex-Zugbussystem 50 als ein TMC-Zugbus ausgebildet sein. Das Zeitmultiplex-Zugbussystem 50 hat damit ein derart beschränktes Leistungs- bzw. Datenübertragungsvermögen, dass ein analoger Wert betreffend einen maximal rückspeisbaren Oberstrom nicht von der führenden Lok 10 zur geführten Lok 20 übertragbar ist.

Dargestellt ist, dass die Loks 10, 20 einen Fahrbetrieb in Doppeltraktion ausführen, wodurch sich der Zugverband 100 in eine mit einem Pfeil angedeutete Richtung fortbewegt, wobei elektrische Leistung aus einer elektrischen Oberleitung 30 bezogen und wobei beim elektrischen Bremsen erzeugter elektrischer Strom (Rückspeisestrom) in die Oberleitung 30 rückgespeist wird. Erkennbar ist ferner eine DruckluftBremsleitung 40 (Hauptluftleitung HL), über die pneumatische Bremsanforderungen von der führenden Lok 10 an die geführte Lok 20 per Druckluft übermittelt werden.

Man erkennt auf der führenden Lok 10 eine Oberstrom-Begrenzungseinrichtung 11 für die Begrenzung des rückgespeisten Oberstroms, welche mittels eines Zeitmultiplex-Zugbussystems 50 funktional mit einer zweiten Blending-Einrichtung 21 der geführten Lok 20 verbunden ist. Der Oberstrom-Begrenzungseinrichtung 11 werden folgende Größen bzw. Signale zugeführt: der maximal rückspeisbare Strom Iₘₐₓ, der von einem Triebfahrzeugführer an einem Display der führenden Lok 10 manuell eingegeben werden kann, ein Ist-Strom I_{IstLF} der führenden Lok 10, ein Ist-Strom I_{IstLG} der geführten Lok 20 und ein pneumatischer Bremswert HL_{Soll}.

Vorgeschlagen wird ein Konzept, welches es erlaubt, die geführte Lok 20 über den von der geführten Lok 20 maximal rückspeisbaren Oberstrom in Kenntnis zu setzen und eine über die Hauptluftleitung gesteuerte elektrische Bremsung derart durchzuführen, dass dieser maximal rückspeisbare Oberstrom nicht überschritten wird.

Aus den genannten Größen bzw. Signalen generiert die Oberstrom-Begrenzungseinrichtung 11 einen elektrischen Brems-Sollwert Eₛₒₗₗ des elektrischen Bremsens, der über das Zeitmultiplex-Zugbussystem 50 an die zweite Blending-Einrichtung 21 der geführten Lok 20 übermittelt wird. Auf diese Weise ist der geführten Lok 20 zu jeder Zeit bekannt, welcher Wert an Oberstrom in die Oberleitung 30 maximal zurückgespeist bzw. nicht überschritten werden darf, wobei die von der geführten Lok 20 aufgebrachte Bremsleistung bei einer über die Hauptluftleitung gesteuerten Bremsung durch einen elektrischen Brems-Sollwert E_{SollLG} und einen pneumatischen Brems-Sollwert P_{SollLG} realisiert wird.

Vorteilhaft ist somit unterstützt, dass die geführte Lok 20 jeweils nur in einem solchen Umfang elektrisch bremst, dass dabei der maximal erlaubte rückspeisbare Strom nicht überschritten wird.

Der Triebfahrzeugführer stellt zu diesem Zweck an jeweiligen Streckenabschnitten an einem Display der führenden Lok 10 das Maß des jeweils für den Streckenabschnitt zulässigen Oberstroms manuell ein.

Die führende Lok 10 schickt bei Bremsung mit der Hauptluftleitung 40 einen der Bremsanforderung entsprechenden E-Bremssollwert über das Multiplex-Zugbussystem 50 an die geführte Lok 20, der erforderlichenfalls abhängig von den Oberstrom-Istwerten der geführten Lok 20 durch die Oberstromregelung reduziert wird.

Die geführte Lok 20 verwendet mit der vorgeschlagenen Lösung den zugeführten E-Bremssollwert Eₛₒₗₗ bei einer Bremsanforderung über die Hauptluftleitung 40 als einen Schwellwert zum Einstellen bzw. Dimensionieren der elektrischen Bremskraft. Wenn die elektrische Bremskraft nicht ausreichend ist, um die über die Hauptluftleitung 40 übermittelte Bremsanforderung HL_{Soll} zu erfüllen, wird auf der geführten Lok 20 die fehlende Bremskraft durch die mittels der zweiten Blending-Einrichtung 21 stufenlos steuerbare pneumatische Blendingbremse erzeugt.

Durch einen E-Bremssollwert Eₛₒₗₗ von 0 % kann der Einsatz der elektrischen Bremse bei einer Bremsanforderung über die Hauptluftleitung 40 über den gesamten Zugverband 100 deaktiviert werden. Dies wird dadurch erreicht, dass der Wert des maximal rückspeisbaren Stroms Iₘₐₓ vom Triebfahrzeugführer auf Null eingestellt wird, wodurch sich der genannte elektrische Bremssollwert Eₛₒₗₗ von 0 % ergibt. Dies kann zum Beispiel in Stationsbereichen erforderlich sein, wenn ein Bremsen des Zugverbands 100 mit genauem Stillstand des Zugverbands 100 in Relation zu einem Prellbock durchgeführt werden muss.

Im Ergebnis wird dadurch der Triebfahrzeugführer vorteilhaft entlastet, da er einen vorgegebenen Oberstrom-Grenzwert nicht selbst überwachen muss.

Die geführte Lok 20 bremst bei Bremsanforderung über die Hauptluftleitung 40 mit dem maximal zulässigen Rückspeisestrom Iₘₐₓ regenerativ. Für den Betreiber des elektrischen Netzes ergibt sich daraus vorteilhaft eine Einsparung an Energiekosten im Betrieb des Zugverbands 100, weil der rückgespeiste Strom einen monetären Nutzen für den Betreiber realisiert.

Lediglich die zu ergänzende Bremskraft wird pneumatisch erzeugt, wodurch auf der geführten Lok 20 vorteilhaft ein Verschleiß der pneumatischen Bremse reduziert bzw. minimiert ist, was vorteilhaft eine verlängerte Betriebsdauer der pneumatischen Bremse der geführten Lok 20 zur Folge hat.

Man erkennt in Fig. 1 auch, dass von der Oberstrom-Begrenzungseinrichtung 11 ein elektrischer Bremswert für die führende Lok 10 erzeugt wird, der mittels einer ersten Blending-Einrichtung 12 in einen elektrischen Brems-Sollwert E_{SollLF} und in einen pneumatischen Brems-Sollwert P_{SollLF} der führenden Lok 10 umgesetzt wird. Die Bereitstellung dieser Brems-Sollwerte der führenden Lok 10 ist an sich bekannt.

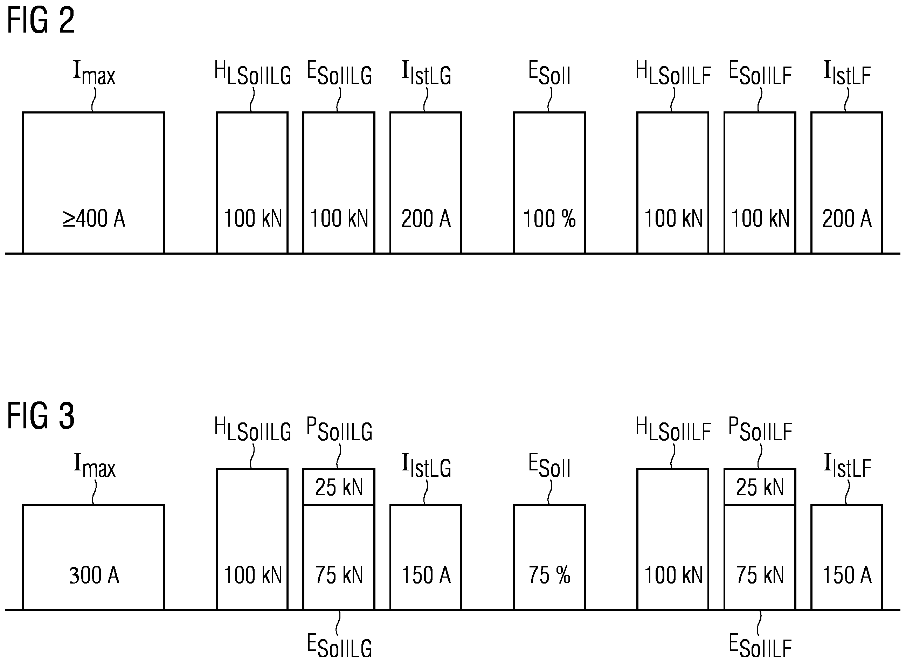

Fig. 2 zeigt eine Verteilung von Strömen zwischen den Loks 10, 20 ohne einen Eingriff der vorgeschlagenen Oberstromregelung. Das Nicht-Aktivieren des genannten Eingriffs ist dadurch bedingt, dass der Grenzwert des maximalen Stroms Iₘₐₓ ≥ 400 A derart groß ist, dass keine Erbringung von pneumatischer Bremsleistung auf der geführten Lok 20 erforderlich ist. Der genannte maximale Strom Iₘₐₓ entspricht Oberströmen I_{IstLF ,}I_{IstLG} der führenden und der geführten Lok 10, 20 von jeweils 200 A.

Weil jedoch bei diesem Wert eine Überschreitung des maximal erlaubten Oberstroms nicht erreicht wird, wird in diesem Fall eine Aktivierung der pneumatischen Bremsung nicht durchgeführt, sodass das gesamte Bremsen der geführten Lok 20 mittels des elektrischen Brems-Sollwerts Eₛₒₗₗ zu 100 % durchgeführt wird, was einer Bremskraft der pneumatischen Bremsanforderung HL_{SollLG} der geführten Lok 20 von 100 kN entspricht, der vollständig (d.h. zu 100 %) in einen elektrischen Brems-Sollwert E_{SollLG} der geführten Lok 20 von 100 kN umgesetzt wird. Eine Begrenzung des rückgespeisten Oberstroms ist in diesem Fall somit nicht erforderlich. Man erkennt, dass der elektrische Brems-Sollwert Eₛₒₗₗ zu 100 % ausgenutzt werden kann, weil beim elektrischen Bremsen der geführten Lok 20 keine Überschreitung des maximalen Rückspeisestroms erreicht wird.

Fig. 3 zeigt eine weitere zahlenmäßig definierte Ausbildung von Strömen der Loks 10, 20. In diesem Fall ist aufgrund der Tatsache, dass der eingegebene Maximalstrom Iₘₐₓ von 300 A geringer ist als in Fig. 2, eine Bereitstellung von pneumatischer Bremsung auf der geführten Lok 20 aktiviert. Dies führt dazu, dass bei der geführten Lok 20 ein pneumatischer Anteil des Bremsens P_{SollLG} von 25 % bereitgestellt wird, damit der maximal zulässige Oberstrom von 300 A, der für die geführte Lok 20 einen maximal zulässigen Oberstrom I_{IStLF} von 150 A bedeutet, nicht überschritten wird. Auf diese Weise wird mittels der Oberstrom-Begrenzungseinrichtung 11 ein elektrischer Brems-Sollwert Eₛₒₗₗ von 75 % der geführten Lok 20 ermittelt, der eine gesamte Bremskraft entsprechend der pneumatischen Bremsanforderung HL_{SollLG} von 100 kN in eine pneumatische Bremskraft von 25 kN und in eine elektrische Bremskraft von 75 kN aufteilt.

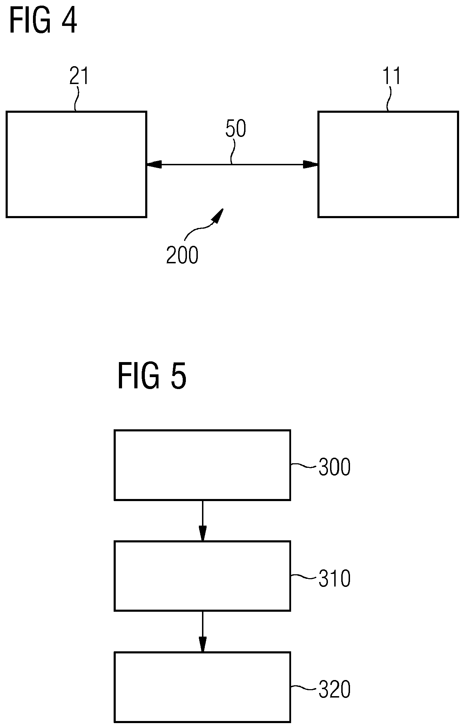

Fig. 4 zeigt ein stark vereinfachtes Blockschaltbild einer Vorrichtung 200 zum Bremsen eines Zugverbands 100. Man erkennt eine Oberstrom-Begrenzungseinrichtung 11 einer führenden Lok 10 (nicht dargestellt), die über ein Zeitmultiplex-Zugbussystem 50 mit einer zweiten Blending-Einrichtung 11 der geführten Lok 20 verbunden ist und die die oben erläuterte Ermittlung des Bremssollwerts für die geführte Lok 20 durchführt.

Fig. 5 zeigt ein prinzipielles Ablaufdiagramm einer Ausführungsform des erfindungsgemäßen Verfahrens zum Bremsen eines Zugverbands 100.

In einem Schritt 300 werden ein Erfassen eines aktuellen elektrischen Betriebsstroms I_{IstLG} der geführten Lok 20, eines aktuellen elektrischen Betriebsstroms I_{IStLF} der führenden Lok 10, eines maximalen Rückstromwerts Iₘₐₓ, eines pneumatischen Bremsanforderungswerts HL_{Soll} der Druckluftbremsleitung 40 durchgeführt.

In einem Schritt 310 wird ein Ermitteln eines maximalen elektrischen Rückstroms und eines elektrischen Bremssollwerts der geführten Lok 20 aus dem aktuellen elektrischen Betriebsstrom I_{IstLG} der geführten Lok 20, dem aktuellen elektrischen Betriebsstrom I_{IStLF} der führenden Lok 10, dem maximalen Betriebsstromwert Iₘₐₓ und dem pneumatischen Bremsanforderungswert HL_{Soll} der Druckluftbremsleitung 40 durchgeführt.

In einem Schritt 320 wird ein elektrisches Bremsen des Zugverbands 100 mittels des elektrischen Bremssollwerts Eₛₒₗₗ derart durchgeführt, dass der maximale elektrische Rückstrom der geführten Lok 20 nicht überschritten wird.

Vorteilhaft lässt sich das vorgeschlagene Verfahren zum Betreiben eines Verkehrsmittels als ein Softwareprogramm ausbilden, welches auf der zentralen Fahrzeugsteuerung der führenden Lok 10 abläuft. Auf diese Weise ist eine einfache Konfigurier- und Änderbarkeit des Verfahrens unterstützt.

Zusammenfassend wird mit der vorliegenden Erfindung ein Verfahren bereitgestellt, mit denen auf einer geführten Lok ein Oberstromgrenzwert eingestellt werden kann, wobei die geführte Lok im Normalfall die elektrische Bremse so hoch als möglich ausnutzen kann, ohne die entsprechende Oberstrom- bzw. Rückspeisestromgrenze zu überschreiten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang wird durch den unabhängigen Anspruch definiert.

### Bezugszeichenliste

- 10: führende Lok
- 11: Oberstrom-Begrenzungseinrichtung
- 12: 1. Blending-Einrichtung
- 20: geführte Lok
- 21: 2. Blending-Einrichtung
- 30: Oberleitung
- 40: Druckluftbremsleitung
- 50: Zeitmultiplex-Zugbussystem
- 100: Zugverband
- 200: Vorrichtung
- 300...320: Verfahrensschritte

## Patentansprüche

1. Verfahren zum Bremsen eines Zugverbands (100),
- wobei eine führende Lok (10) mit wenigstens einer geführten Lok (20) mittels eines Zeitmultiplex-Zugbussystems (50) verbunden ist,
aufweisend die Schritte:
- Erfassen eines aktuellen elektrischen Betriebsstroms (I_{ItLG}) der geführten Lok (20),
- Erfassen eines aktuellen elektrischen Betriebsstroms (I_{IstLF}) der führenden Lok (10);
- Erfassen eines maximalen Rückstromwerts (Iₘₐₓ) als maximal rückspeisbaren Strom;
- Erfassen eines pneumatischen Bremsanforderungswerts (HLₛₒₗₗ) der Druckluftbremsleitung (40);
- Ermitteln eines maximalen elektrischen Rückstroms und eines elektrischen Bremssollwerts der geführten Lok (20) aus dem aktuellen elektrischen Betriebsstrom (I_{IstLG}) der geführten Lok (20), dem aktuellen elektrischen Betriebsstrom (I_{IstLF}) der führenden Lok (10), dem maximalen Rückstromwert (Iₘₐₓ) und dem pneumatischen Bremsanforderungswert (HLₛₒₗₗ) der Druckluftbremsleitung (40);
- Übermitteln des elektrischen Bremssollwerts (E_{Soll}) über das Zeitmultiplex-Zugbussystem (50) an die geführte Lok (20),
- Elektrisches Bremsen des Zugverbands (100) mittels des elektrischen Bremssollwerts (E_{Soll}) derart, dass der maximale rückspeisbare Oberstrom der geführten Lok (20) nicht überschritten wird.

2. Verfahren nach Anspruch 1, wobei ein manuell eingegebener maximaler Rückstromwert (Iₘₐₓ) erfasst wird.

3. Verfahren nach Anspruch 1 oder 2, wobei ein auf Null eingestellter maximaler Rückstromwert (Iₘₐₓ) erfasst wird.

4. Verfahren nach einem der Ansprüche 1 bis 3, wobei der aktuelle elektrische Betriebsstrom (I_{IstLG}) der geführten Lok (20) und der elektrische Bremssollwert (E_{Soll}) über einen TMC-Bus übertragen werden.

## Claims

1. Method for braking a train set (100),
- wherein a guiding locomotive (10) is connected to at least one guided locomotive (20) by means of a time multiplex train bus system (50),
the method having the following steps:
- detecting an actual electrical operating current (I_{IstLG}) of the guided locomotive (20),
- detecting an actual electrical operating current (I_{IstLF}) of the guiding locomotive (10);
- detecting a maximum return current value (Iₘₐₓ) as a current which can be maximally fed back;
- detecting a pneumatic braking request value (HLₛₒₗₗ) of the compressed air brake line (40);
- determining a maximum electrical return current and an electrical target braking value of the guided locomotive (20) from the actual electrical operating current (I_{IstLG}) of the guided locomotive (20), the actual electrical operating current (I_{IstLF}) of the guiding locomotive (10), the maximum return current value (Iₘₐₓ) and the pneumatic braking request value (HLₛₒₗₗ) of the compressed air brake line (40);
- transmitting the electrical target braking value (E_{Soll}) via the time multiplex train bus system (50) to the guided locomotive (20),
- electrically braking the train set (100) by means of the electrical target braking value (Eₛₒₗₗ) in such a manner that the maximum overcurrent which can be fed back of the guided locomotive (20) is not exceeded.

2. Method according to Claim 1, wherein a manually input maximum return current value (Iₘₐₓ) is detected.

3. Method according to Claim 1 or 2, wherein a maximum return current value (Iₘₐₓ) set to zero is detected.

4. Method according to one of Claims 1 to 3, wherein the actual electrical operating current (I_{IstLG}) of the guided locomotive (20) and the electrical target braking value (Eₛₒₗₗ) are transmitted via a TMC bus.

## Revendications

1. Procédé pour le freinage d'un train (100),
- dans lequel une locomotive de tête (10) est reliée à au moins une locomotive guidée (20) au moyen d'un système de bus de train à multiplexage dans le temps (50),
présentant les étapes de :
- détection d'un courant de fonctionnement électrique actuel ( I_{IstLG}) de la locomotive guidée (20),
- détection d'un courant de fonctionnement électrique actuel ( I_{IstLF}) de la locomotive de tête (10) ;
- détection d'une valeur maximale de courant de retour (Iₘₐₓ) comme courant récupérable au maximum ;
- détection d'une valeur de demande de freinage pneumatique (HLₛₒₗₗ) de la conduite de frein à air comprimé (40) ;
- détermination d'un courant de retour électrique maximal et d'une valeur de consigne de freinage électrique de la locomotive guidée (20) à partir du courant de fonctionnement électrique actuel (I_{IstLG}) de la locomotive guidée (20), du courant de fonctionnement électrique actuel (I_{IstLF}) de la locomotive de tête (10), de la valeur maximale de courant de retour (Iₘₐₓ) et de la valeur de demande de freinage pneumatique (HLₛₒₗₗ) de la conduite de frein à air comprimé (40) ;
- transmission de la valeur de consigne de freinage électrique (Eₛₒₗₗ) à la locomotive guidée (20) via le système de bus de train à multiplexage dans le temps (50),
- freinage électrique du train (100) au moyen de la valeur de consigne de freinage électrique (Eₛₒₗₗ) de sorte que le courant amont récupérable maximal de la locomotive guidée (20) n'est pas dépassé.

2. Procédé selon la revendication 1, dans lequel une valeur de courant de retour maximale (Iₘₐₓ) saisie manuellement est détectée.

3. Procédé selon la revendication 1 ou 2, dans lequel une valeur de courant de retour maximale (Iₘₐₓ) réglée à zéro est détectée.

4. Procédé selon l'une des revendications 1 à 3, dans lequel le courant de fonctionnement électrique actuel (I_{IstLG}) de la locomotive guidée (20) et la valeur de consigne de freinage électrique (Eₛₒₗₗ) sont transmises via un bus TMC.
